# EUROPÄISCHE PATENTSCHRIFT

(11) **EP 4 357 316 B1**
(45) Veröffentlichungstag und Bekanntmachung des Hinweises auf die Patenterteilung: **26.02.2025**
(21) Anmeldenummer: 23201643.6
(22) Anmeldetag: 04.10.2023
(51) Int. Cl.: C04B 28/04

(54) **ZEMENTMISCHUNG, INSBESONDERE TIEFBOHRZEMENTMISCHUNG, DARAUS HERGESTELLTE ZEMENTSUSPENSION, VERFAHREN ZUR HERSTELLUNG DER ZEMENTMISCHUNG, VERWENDUNG DER ZEMENTSUSPENSION SOWIE TROCKENBETONMISCHUNG, TROCKENMÖRTELMISCHUNG, FRISCHBETONMASSE UND FRISCHMÖRTELMASSE JEWEILS MIT DER ZEMENTMISCHUNG**
CEMENT MIXTURE, IN PARTICULAR DEEP DRILLING CEMENT MIXTURE, CEMENT SUSPENSION PRODUCED THEREFROM, METHOD FOR PRODUCING THE CEMENT MIXTURE, USE OF THE CEMENT SUSPENSION AND DRY CONCRETE MIXTURE, DRY MORTAR MIXTURE, FRESH CONCRETE MASS AND FRESH MORTAR MASS EACH COMPRISING THE CEMENT MIXTURE
MÉLANGE DE CIMENT, EN PARTICULIER MÉLANGE DE CIMENT POUR FORAGE PROFONDE, SUSPENSION DE CIMENT PRODUITE À PARTIR DE CELUI-CI, PROCÉDÉ DE PRODUCTION DU MÉLANGE DE CIMENT, UTILISATION DE LA SUSPENSION DE CIMENT ET DU MÉLANGE DE BÉTON SEC, MÉLANGE DE MORTIER SEC, MASSE DE BÉTON FRAÎCHE ET MASSE DE MORTIER FRAÎCHE CHACUNE COMPRENANT LE MÉLANGE DE CIMENT

(30) Priorität: 12.10.2022 DE 102022210744
(43) Veröffentlichungstag der Anmeldung: 24.04.2024
(73) Patentinhaber: Dyckerhoff GmbH, 65203 Wiesbaden (DE)
(72) Erfinder: Canonico, Fulvio, 65203 Wiesbaden (DE); Plack, Heiko, 65203 Wiesbaden (DE); Paul, Markus, 65203 Wiesbaden (DE)
(74) Vertreter: Dr. Solf & Zapf Patent- und Rechtsanwalts PartG mbB

(56) Entgegenhaltungen:
- US-A1- 2014 332 216
- ACHANG MERCY ET AL: "Adding olivine micro particles to Portland cement based wellbore cement slurry as a sacrificial material: A quest for the solution in mitigating corrosion of wellbore cement", CEMENT AND CONCRETE COMPOSITES, vol. 121, 1 August 2021 (2021-08-01), GB, pages 104078, XP093133628, ISSN: 0958-9465, Retrieved from the Internet <URL:https://www.sciencedirect.com/science/article/pii/S0958946521001475/pdfft?md5=87ea800b5b36b81ce49b315e105de71b&pid=1-s2.0-S0958946521001475-main.pdf> [retrieved on 20240221], DOI: 10.1016/j.cemconcomp.2021.104078

## Beschreibung

Die vorliegende Erfindung betrifft eine Zementmischung, insbesondere eine Tiefbohrzementmischung, eine daraus hergestellte Zementsuspension, ein Verfahren zur Herstellung der Zementmischung, die Verwendung der Zementsuspension sowie eine Trockenbetonmischung, eine Trockenmörtelmischung, eine Frischbetonmasse und eine Frischmörtelmasse jeweils enthaltend die Zementmischung.

Zement ist bekanntermaßen ein hydraulisches, anorganisches Bindemittel, welches durch die chemische Reaktion mit Wasser erstarrt und erhärtet (Hydratation) und nach dem Erhärten auch unter Wasser raumbeständig bleibt. Zement ist feingemahlen bzw. mehlförmig. Es handelt sich um ein Schüttgut.

Unter mehlförmig wird im Rahmen der Erfindung eine Korngröße ≤ 200 µm verstanden.

Sofern nicht anders angegeben, erfolgt zudem die Bestimmung von Korngrößen im Rahmen der Erfindung mittels Laserlichtbeugung gemäß ISO 13320:2020-01.

Zemente werden nach ihrer Zusammensetzung gemäß der DIN 197-1:2011-11 und der DIN 197-5:2021-07 in unterschiedliche Zementarten bzw. Normalzemente CEM I-VI eingeteilt. Die unterschiedlichen Zementarten enthalten alle mindestens 95 M.-% Hauptbestandteile und höchstens 5 M.-% Nebenbestandteile, bezogen auf die Summe an Haupt- und Nebenbestandteilen. Bei den Hauptbestandteilen handelt es sich neben Portlandzementklinker (K) um Hüttensand (S), Silicastaub (D), natürliche Puzzolane (P), natürlich getemperte Puzzolane (Q), kieselsäurereiche Flugasche (V), kalkreiche Flugasche (W), gebrannten Schiefer (T), Kalkstein (L oder LL). Ein Hauptbestandteil muss mit mindestens 5 M.-% bezogen auf die Summe an Haupt- und Nebenbestandteilen enthalten sein.

Portlandzementklinker besteht bekanntermaßen im Wesentlichen aus den vier Klinkerphasen Tricalciumsilikat (Alit) C₃S, Dicalciumsilikat (Belit) C₂S, Tricalciumaluminat C₃A und Tetracalciumaluminatferrit C₄AF. Zudem kann Portlandzementklinker freies CaO (Calciumoxid) aufweisen. Die Klinkerphasen reagieren bei der Hydratation bekanntermaßen hauptsächlich zu Calciumsilikathydraphasen (CSH-Phasen). Bei der Hydratation von C₃S und C₂S bildet sich zudem bekanntermaßen Portlandit (Calciumhydroxid (Ca(OH)₂)).

Puzzolane sind gemäß DIN 197-1 :2011-11 natürliche Stoffe mit kieselsäurehaltiger oder alumosilicatischer Zusammensetzung oder eine Kombination davon. Im Gegensatz zur DIN EN 197-1:2011-11 werden Flugasche und Silicastaub im Rahmen dieser Erfindung zu den Puzzolanen gerechnet, da sie puzzolanische Eigenschaften aufweisen.

Puzzolane erhärten nach dem Anmachen mit Wasser nicht selbständig, sondern reagieren, fein gemahlen und in Gegenwart von Wasser, bei normaler Umgebungstemperatur mit dem gelöstem Calciumhydroxid (Ca(OH)₂) unter Entstehung von festigkeitsbildenden Calciumsilicat- und Calciumaluminatverbindungen.

Puzzolane bestehen hauptsächlich aus reaktionsfähigem Siliciumdioxid (SiO₂) und Aluminiumoxid (Al₂O₃). Der Rest enthält Eisen(III)-oxid (Fe₂O₃) und andere Oxide. Der Anteil von reaktionsfähigem Calciumoxid (CaO) ist für die Erhärtung unbedeutend. Der Massenanteil an reaktionsfähigem Siliciumdioxid (SiO₂) muss normgemäß mindestens 25,0 M.-% betragen.

Natürliche Puzzolane (P) sind im Allgemeinen Stoffe vulkanischen Ursprungs oder Sedimentgestein mit geeigneter chemisch-mineralogischer Zusammensetzung und müssen den Anforderungen gemäß 5.2.3.1 der DIN 197-1:2011-11 entsprechen.

Natürliche getemperte Puzzolane (Q) sind thermisch aktivierte Stoffe vulkanischen Ursprungs, Tone, Schiefer oder Sedimentgestein und müssen den Anforderungen gemäß 5.2.3.1 der DIN 197-1:2011-11 entsprechen.

Bei den Nebenbestandteilen handelt es sich um besonders ausgewählte, anorganische natürliche mineralische Stoffe, anorganische mineralische Stoffe, die aus der Klinkerherstellung stammen, oder Bestandteile wie in 5.2 der DIN 197-1:2011-11 beschrieben, es sei denn, sie sind bereits als Hauptbestandteile im Zement enthalten.

Zement enthält zudem zusätzlich zu den Haupt- und Nebenbestandteilen Calciumsulfat zur Regelung des Erstarrungsverhaltens. Calciumsulfat kann in Form von Gips, Halbhydrat oder Anhydrit oder einer Mischung davon sein enthalten sein. Der Anteil an Calciumsulfatträger wird auf die Summe an Haupt- und Nebenbestandteilen bezogen.

Bei Tiefbohrzement handelt es sich um Zement, der zum Auskleiden von tiefen Bohrlöchern, z. B. bei der Erdölgewinnung verwendet wird. In der Regel handelt es sich bei Tiefbohrzement um Portland- Kompositzemente, die sich aufgrund ihrer Zusammensetzung und Korngrößenverteilung für die Zementation von Bohrlöchern unterschiedlicher Tiefen, ohne oder mit Zementationsadditiven, eignen.

Tiefbohrzemente werden unter Anderem in der API Specification 10A, Twenty-Fifth Edition, March 2019 (im Folgenden API Specification 10A genannt) und der DIN EN ISO 10426-1:2007-01 spezifiziert.

Die Erschließung von Öl- bzw. Gaslagerstätten findet heutzutage in immer größeren Tiefen statt. Sie erfordert die Einzementierung der Rohrtour bzw. Verrohrung zum Abdichten und Abstützen der Bohrlochwand. Des Weiteren dient der Zementmantel dazu, die Migration von Lagerstättenflüssigkeiten oder -gasen in höher- oder tiefergelegene Formationen zu unterbinden (sog. "zonal isolation").

Bei der Tiefbohrzementierung wird eine aus Zement und Wasser hergestellte Zementschlämme bzw. Zementsuspension durch die Rohrtour zur Bohrlochsohle gepumpt und dort von unten nach oben in den Ringraum zwischen Gesteinswand und Rohrtour gepresst. Im Bohrloch können dabei extreme Bedingungen herrschen, unter anderem hohe Temperaturen bis zu 250°C und hohe Drücke bis zu 200 MPa. Zudem können aggressive Lagerstättenwässer vorhanden sein. Aufgrunddessen werden der Zementsuspension in der Regel Hochleistungsadditive zugesetzt, um eine vollständige Zementierung des Ringraums zu gewährleisten. Insbesondere handelt es sich bei den Hochleistungsadditiven um Wasserretentionsmittel und/oder Fließmittel und/oder Verzögerer. Die Wasserretentionsmittel verhindern eine übermäßige Wasserabgabe an poröse Formationen, so dass das Eindicken der Schlämme während des Pumpvorgangs verhindert wird und ein konstanter Wasser-Zement-Wert gewährleistet wird. Dadurch wird eine vollständige Hydratation des Zementes sichergestellt. Um gleichzeitig eine Verpumpbarkeit über mehrere 1.000 m zu gewährleisten, werden Fließmittel und Verzögerer verwendet.

Des Weiteren ist es bekannt, die ausgeförderten Ölfelder zur Speicherung von CO₂ zu nutzen, um dem Klimawandel entgegen zu wirken. Das CO₂ wird zunächst abgeschieden und anschließend in einer Langzeit-Speicherstätte, z. B. dem Ölfeld, gespeichert (CO₂ Capture and Storage, kurz CCS).

Auch in diesem Fall muss der Zementmantel den veränderten Bedingungen standhalten. Insbesondere sollte er nicht zur Carbonatisierung durch Reaktion mit dem CO₂ neigen, da dies zu Rissen führen kann.

Bekanntermaßen wird Zement auch zur Herstellung von Bauteilen aus Festbeton und zur Herstellung von Mörtel verwendet.

Festbeton ist ein hydraulisch erhärtetes Gemisch, welches hergestellt wird aus einer frischen Betonmischung bzw. Betonfrischmasse bzw. einem Frischbeton enthaltend hydraulisches Bindemittel, mindestens einen Zuschlagstoff, insbesondere eine Gesteinskörnung, und Anmachwasser. Beton ist unter anderem in der DIN EN 206-1:2013+A2:2021/DIN 1045-2:2008-08 genormt.

Im Gegensatz zum Beton, der zumindest einen groben Zuschlagstoff mit einer Korngröße > 4 mm aufweist, weist der Zuschlagstoff im Mörtel eine Korngröße von höchstens 4 mm auf.

Für die Herstellung von Frischbetonmassen bzw. Frischmörtelmassen werden häufig Trockenbetonmischungen bzw. Trockenmörtelmischungen (Werk-Trockenmörtel bzw. Werkmörtel) verwendet. Hierbei handelt es sich um vorfabrizierte Trockenmischungen, aufweisend zumindest ein mineralisches Bindemittel und zumindest einen Zuschlagstoff, die auf der Baustelle nur noch mit Wasser zu einem Frischbeton bzw. Frischmörtel angerührt werden müssen und damit gebrauchsfertig sind.

Der Artikel "Adding olivine micro particles to Portland cement based wellbore cement slurry as a sacrificial material: A quest for the solution in mitigating corrosion of wellbore cement", Mercy Achang, Mileva Radonjic, offenbart eine Zementmischung, die Portlandzementklinker und Olivin enthält. Der Gehalt an Olivin, bezogen auf den Zementgehalt, liegt bei 5 M.-%.

Aufgabe der vorliegenden Erfindung ist die Bereitstellung einer Zementmischung, vorzugsweise einer Tiefbohrzementmischung, die eine gute Pumpbarkeit der daraus hergestellten Zementsuspension und eine gute Dauerhaftigkeit des daraus erhärteten Zementsteins gewährleistet, sowie eines Verfahrens zu deren Herstellung.

Weitere Aufgaben sind die Bereitstellung einer derartigen Zementsuspension sowie einer Trockenbetonmischung, einer Trockenmörtelmischung, einer Frischbetonmasse und einer Frischmörtelmasse jeweils enthaltend die Zementmischung.

Diese Aufgabe wird durch eine Zementmischung mit den Merkmalen von Anspruch 1, ein Verfahren mit den Merkmalen von Anspruch 10, eine Zementsuspension mit den Merkmalen von Anspruch 11, eine Trockenmörtelmischung mit den Merkmalen von Anspruch 15, eine Frischmörtelmasse mit den Merkmalen von Anspruch 16, eine Trockenbetonmischung mit den Merkmalen von Anspruch 17 und eine Frischbetonmasse mit den Merkmalen von Anspruch 18 gelöst. Vorteilhafte Weiterbildungen der Erfindung sind in den sich jeweils anschließenden Unteransprüchen gekennzeichnet.

Die erfindungsgemäße trockene, hydraulisch erhärtende, mehlförmige Zementmischung weist 95-100 M.-% Hauptbestandteile und 0-5 M.-% Nebenbestandteil(e), jeweils bezogen auf die Summe aus Haupt- und Nebenbestandteilen, sowie zusätzlich zu den Haupt- und Nebenbestandteilen zumindest einen Erstarrungsregler auf bzw. besteht daraus.

Analog wie in der DIN 197-1:2011-11 definiert, handelt es sich im Rahmen der Erfindung bei einem Hauptbestandteil um einen anorganischen Stoff, dessen Anteil mehr als 5 M.-% der Gesamtsumme aller Haupt- und Nebenbestandteile beträgt. Ein Nebenbestandteil ist demgemäß ein anorganischer Stoff, dessen Anteil nicht mehr als 5 M.-% der Gesamtsumme aller Haupt- und Nebenbestandteile beträgt. Die Haupt- und Nebenbestandteile sind dabei im Rahmen der Erfindung nicht auf die in der DIN 197-1:2011-11 genannten Stoffe beschränkt.

Erfindungsgemäß weist die Zementmischung auf:
a) als Hauptbestandteil Portlandzementklinker in einer Menge von 70 bis 85 M.-%, bezogen auf die Summe aus Haupt- und Nebenbestandteilen,
b) als Haupt- oder Nebenbestandteil zumindest ein Puzzolan in einer Gesamtmenge an Puzzolan von 5 bis 25 M.-%, bezogen auf die Summe aus Haupt- und Nebenbestandteilen, und
c) als Haupt- oder Nebenbestandteil zumindest eine, mineralische, hydraulisch inaktive Zusatzkomponente, die eine Reindichte > 3 g/cm³, bestimmt gemäß DIN EN 196-6:2019-03 aufweist.

Der Gesamtmenge an Zusatzkomponente, bezogen auf die Summe aus Haupt- und Nebenbestandteilen, beträgt erfindungsgemäß 5 bis 15 M.-%.

**Angegebene** Massenanteile beziehen sich im Rahmen der Erfindung selbstverständlich immer auf die Trockenmasse, sofern nichts Anderes angegeben ist.

Zudem weist die inaktive Zusatzkomponente vorzugsweise eine Reindichte ≥ 3,0 bis 4,4 g/cm³, bevorzugt ≥ 3,0 bis 4,0 g/cm³, besonders bevorzugt ≥ 3,0 bis 3,5 g/cm³, bestimmt gemäß DIN EN 196-6:2019-03 auf.

Zudem beträgt vorzugsweise die Summe aus Portlandzementklinker, Puzzolan und Zusatzkomponente mindestens 60 M.-%, bevorzugt mindestens 80 M.-%, besonders bevorzugt mindestens 85 M.-%, ganz besonders bevorzugt mindestens 95 M.-%, bezogen auf die Summe aus Haupt- und Nebenbestandteilen. Besonders bevorzugt weist die Zementmischung ausschließlich Portlandzementklinker, das zumindest eine Puzzolan und die zumindest eine Zusatzkomponente als Haupt- oder Nebenbestandteile auf.

Falls weitere Bestandteile vorhanden sind, weist die Zementmischung vorzugsweise Hüttensand und/oder Quarzmehl als weiteren Hauptbestandteil oder Nebenbestandteil auf.

Außerdem besteht die Zementmischung zu mindestens 95 M.-%, bevorzugt zu 98 M.-%, besonders bevorzugt zu 100 M.-% aus den Haupt- und Nebenbestandteilen und Erstarrungsregler.

Gegebenenfalls können zum Beispiel zusätzlich zu den Haupt- und Nebenbestandteilen und Erstarrungsregler organische Zusatzmittel enthalten sein, worauf weiter unten näher eingegangen wird.

Im Rahmen der Erfindung wurde überraschenderweise herausgefunden, dass die Kombination des zumindest einen Puzzolans mit der zumindest einen Zusatzkomponente zur einer Zementmischung führt, die hervorragend für die Tiefbohrzementierung verwendet werden kann. Denn die Verwendung des Puzzolans gewährleistet einen geringen Gehalt an Calciumhydroxid im erhärteten Zementstein, da das Puzzolan in an sich bekannter Weise mit dem bei der Hydratation des Portlandzementklinkers freigesetzten Calciumhydroxid reagiert.

Dadurch ist der erhärtete Zementstein wenig anfällig für Carbonatisierung, so dass ein daraus bestehender Zementmantel beständiger wird und das Ölfeld auch als Langzeit-Speicherstätte für CO₂ verwendet werden kann.

Die Verwendung der meist relativ feinen Puzzolane wirkt sich in der Regel aber negativ auf das Fließverhalten einer aus der Zementmischung hergestellten Zementsuspension auf. Insbesondere erhöht sich dadurch der Wasseranspruch der Zementmischung und damit reduziert sich die Dichte der Zementsuspension. Die Zusatzkomponente kompensiert dies wieder, indem sie die Dichte der Zementsuspension erhöht. Zudem ist die Zusatzkomponente aber hydraulisch inaktiv bzw. inert und beeinflusst somit die Hydratation nicht signifikant. Durch den Zusatz der Zusatzkomponente kann vielmehr der Anteil an Portlandzementklinker reduziert werden, was wiederum den Anteil an bei der Hydratation entstehendem Calciumhydroxid reduziert und dadurch ebenfalls die Carbonatisierungsbeständigkeit verbessert.

Vorzugsweise besteht die zumindest eine Zusatzkomponente dabei aus Olivin. Olivin weist bekanntermaßen die durchschnittliche Zusammensetzung [(Mg,Fe)₂SiO₄] auf, üblicherweise enthaltend Forsterit [Mg₂SiO₄] und Fayalit [Fe₂SiO₄], sowie deren Mischkristallen, die neben Eisen und Magnesium auch andere Element wie Mangan enthalten können.

Zudem kann die zumindest eine Zusatzkomponente auch aus Forsterit oder Fayalit bestehen.

Es handelt sich bei der Zusatzkomponente also vorzugsweise um Olivin, Forsterit und/oder Fayalit, bevorzugt um Olivin.

Dass die Zementmischung zumindest eine Zusatzkomponente enthält, bedeutet, dass sie auch eine Mischung aus verschiedenen Zusatzkomponenten enthalten kann.

Dies gilt im Rahmen der Anmeldung grundsätzlich für die Formulierung "zumindest eine(n)". Wenn zumindest eine Komponente enthalten sein kann, bedeutet dies im Rahmen dieser Anmeldung, dass auch eine Mischung aus verschiedenen dieser Komponenten enthalten sein kann.

Vorteil der aus Olivin, Forsterit oder Fayalit bestehenden Zusatzkomponente ist, dass sie mit CO₂ unter Bildung von MgCO₃, FeCO₃ und SiO₂ reagieren kann. Dies bewirkt, dass die Reaktionsprodukte den Porenraum ausfüllen bzw. reduzieren und somit potenzielle Fließwege für eindringende Flüssigkeiten und Gase verschließen. Dies kann auch nachträglich bei vorher entstandenen Mikrorissen oder anderen Gefügeschäden in der Zementmatrix erfolgen.

Die Reaktion mit CO₂ findet allerdings nicht in der Anwesenheit von Calciumhydroxid statt. Auch aus diesem Grund ist die Kombination mit dem Puzzolan vorteilhaft, weil dadurch der Calciumhydroxidgehalt im erhärteten Zementstein gesenkt wird.

Vorzugsweise weist die Zusatzkomponente, bevorzugt die Olivin-Zusatzkomponente, einen SiO₂-Gehalt von 30 bis 60 M.-%, bevorzugt 35 bis 55 M.-%, besonders bevorzugt 40 bis 50 M.-%, bestimmt mittels chemischer Röntgenfluoreszenzanalyse gemäß DIN EN 196-2:2013-10, auf. Dies bewirkt, dass bei der chemischen Reaktion von Olivin mit CO₂ als Reaktionsprodukt SiO₂ entsteht welches zu den oben genannten positiven Eigenschaften hinsichtlich der Verschließung der Porenräume führt.

Außerdem weist die Zusatzkomponente, bevorzugt die Olivin-Zusatzkomponente, vorzugsweise einen MgO-Gehalt von 1 bis 60 M.-%, bevorzugt 25 bis 55 M.-%, besonders bevorzugt 35 bis 45 M.-%, bestimmt mittels chemischer Röntgenfluoreszenzanalyse gemäß DIN EN 196-2:2013-10, auf. Dies bewirkt, dass bei der chemischen Reaktion von Olivin mit CO₂ als Reaktionsprodukt MgCO₃ entsteht welches zu den oben genannten positiven Eigenschaften hinsichtlich der Verschließung der Porenräume führt.

Des Weiteren weist die Zusatzkomponente, bevorzugt die Olivin-Zusatzkomponente, vorzugsweise einen Fe₂O₃-Gehalt von 1 bis 75 M.-%, bevorzugt 5 bis 45 M.-%, besonders bevorzugt 5 bis 15 M.-%, bestimmt mittels chemischer Röntgenfluoreszenzanalyse gemäß DIN EN 196-2:2013-10, auf. Dies bewirkt, dass bei der chemischen Reaktion von Olivin mit CO₂ als Reaktionsprodukt FeCO₃ entsteht welches zu den oben genannten positiven Eigenschaften hinsichtlich der Verschließung der Porenräume führt.

Gemäß einer bevorzugten Ausführungsform weist die Zementmischung den Portlandzementklinker in einer Menge von 70 bis 85 M.-%, bezogen auf die Summe aus Haupt- und Nebenbestandteilen, das zumindest eine Puzzolan in einer Gesamtmenge an Puzzolan von 5 bis 25 M.-%, bezogen auf die Summe aus Haupt- und Nebenbestandteilen, und die zumindest eine mineralische, hydraulisch inaktive Zusatzkomponente in einer Gesamtmenge an Zusatzkomponente von 5 bis 15 M.-%, bezogen auf die Summe aus Haupt- und Nebenbestandteilen auf, wobei die Zusatzkomponente einen MgO-Gehalt von 1 bis 60 M.-%, einen Fe₂O₃-Gehalt von 1 bis 75 M.-% und einen SiO₂-Gehalt von 30 bis 60 M.-%, jeweils bestimmt mittels chemischer Röntgenfluoreszenzanalyse gemäß DIN EN 196-2:2013-10, aufweist.

Des Weiteren weist die Zusatzkomponente vorzugsweise einen d₉₀-Wert von 3 bis 120 µm, bevorzugt von 10 bis 100 µm, besonders bevorzugt 50 bis 90 µm, und/oder einen d₅₀-Wert von 3 bis 100 µm, bevorzugt von 10 bis 70 µm, besonders bevorzugt 20 bis 40 µm, bestimmt gemäß DIN EN 196-6:2019-03, auf.

Außerdem weist die Zusatzkomponente vorzugsweise einen Blaine-Wert von 1500 bis 7000 cm²/g, bevorzugt von 2000 bis 6000 cm²/g, besonders bevorzugt 3000 bis 5000 cm²/g, bestimmt gemäß DIN EN 196-6:2019-03, auf.

Vorzugsweise handelt es sich bei dem zumindest einen Puzzolan um Trass oder Flugasche oder Silicastaub oder kalzinierten Ton. Bevorzugt weist die Zementmischung zumindest Trass auf. Dass die Zementmischung zumindest ein Puzzolan enthält, bedeutet (wie oben bereits erwähnt), dass sie auch eine Mischung aus verschiedenen Puzzolanen enthalten kann.

Trass ist bekanntermaßen ein Vulkangestein, das zu über 50 M.-% aus Kieselsäure besteht. Weitere Bestandteile sind verschiedene Mineralien und gebundenes Wasser. Das natürliche Ausgangsmaterial heißt Tuffstein. Dieser wird abgebaut, getrocknet und gemahlen und bildet dann Trass.

Das Puzzolan weist vorzugsweise eine Reindichte von 2,1 bis 2,9 g/cm³, bevorzugt 2,3 bis 2,9 g/cm³, besonders bevorzugt 2,5 bis 2,7 g/cm³, bestimmt gemäß DIN EN 196-6:2019-03, auf.

Zudem weist das Puzzolan, bevorzugt der Trass, vorzugsweise einen d₉₀-Wert von 40 bis 120 µm, bevorzugt von 50 bis 100 µm, besonders bevorzugt von 60 bis 90 µm, und/oder einen d₅₀-Wert von 3 bis 50 µm, bevorzugt von 5 bis 30 µm, besonders bevorzugt von 10 bis 20 µm, bestimmt gemäß DIN EN 196-6:2019-03, auf.

Außerdem weist das Puzzolan, bevorzugt der Trass, vorzugsweise einen Blaine-Wert von 3000 bis 8500 cm²/g, bevorzugt von 4000 bis 8000 cm²/g, besonders bevorzugt 5000 bis 7000 cm²/g, bestimmt gemäß DIN EN 196-6:2019-03, auf.

Vorzugsweise weist das Puzzolan, bevorzugt der Trass, außerdem einen SiO₂-Gehalt von 25 bis 70 M.-%, bevorzugt 40 bis 60 M.-%, besonders bevorzugt 45 bis 55 M.-%, bestimmt mittels chemischer Röntgenfluoreszenzanalyse gemäß DIN EN 196-2:2013-10, auf.

Vorzugsweise weist das Puzzolan, bevorzugt der Trass, außerdem einen Gehalt an reaktiver Kieselsäure > 25 M.-%, bestimmt mittels Prüfung der Puzzolanität gemäß DIN EN 196-5:2011-06 auf.

Dies ist wichtig für die puzzolanische Reaktion, bei der Calciumhydroxid aus der Zementhydratation chemisch gebunden wird, und somit die chemische Widerstandsfähigkeit der Zementmischung erhöht wird.

Der Portlandzementklinker weist vorzugsweise eine Reindichte von 3,0 bis 3,3 g/cm³, bevorzugt 3,1 bis 3,25 g/cm³, bestimmt gemäß DIN EN 196-6:2019-03 auf.

Und die Zementmischung weist vorzugsweise einen d₉₀-Wert von 20 bis 80 µm, bevorzugt von 30 bis 60 µm, besonders bevorzugt von 40 bis 50 µm, und/oder einen d₅₀-Wert von 5 bis 50 µm, bevorzugt von 10 bis 30 µm, besonders bevorzugt von 10 bis 20 µm, bestimmt gemäß DIN EN 196-6:2019:03, auf.

Außerdem weist die Zementmischung vorzugsweise einen Blaine-Wert von 3000 bis 5000 cm²/g, bevorzugt von 3000 bis 4500 cm²/g, besonders bevorzugt 3500 bis 4500 cm²/g, bestimmt gemäß DIN EN 196-6:2019-03, auf.

Vorzugsweise weist außerdem der Portlandzementklinker einen CaO-Gehalt ≤ 75 M.-%, bevorzugt ≤ 70 M.-%, besonders bevorzugt ≤ 68 M.-%, und/oder einen CaO-Gehalt von 45 bis 75 M.-%, bevorzugt 50 bis 70 M.-%, besonders bevorzugt 60 bis 68 M.-%, bestimmt mittels chemischer Röntgenfluoreszenzanalyse gemäß DIN EN 196-2:2013-10, auf. Dadurch wird der Gehalt an Calciumhydroxid im erhärteten Zementstein ebenfalls reduziert.

Vorzugsweise weist der Portlandzementklinker einen C₃A-Gehalt ≤ 8 M.-%, bevorzugt ≤ 5 M.-%, besonders bevorzugt ≤ 3 M.-%, und/oder einen C₃A-Gehalt von 0 bis 8 M.-%, bevorzugt 0 bis 5 M.-%, besonders bevorzugt 0 bis 3 M.-%, bestimmt mittels chemischer Röntgenfluoreszenzanalyse gemäß DIN EN 196-2:2013-10 und anschließender Berechnung gemäß DIN EN ISO 10426:2007-01, auf. Dies bewirkt, dass die Widerstandsfähigkeit gegen Sulfatangriff erhöht wird.

Zudem weist der Portlandzementklinker vorzugsweise einen C₃S-Gehalt ≤ 80 M.-%, bevorzugt ≤ 65 M.-%, besonders bevorzugt ≤ 55 M.%, und/oder einen C₃S-Gehalt von 40 bis 80 M.-%, bevorzugt 48 bis 65 M.-%, besonders bevorzugt 50 bis 55 M.%, bestimmt mittels chemischer Röntgenfluoreszenzanalyse gemäß DIN EN 196-2:2013-10 und anschließender Berechnung gemäß DIN EN ISO 10426:2007-01, auf. Dies bewirkt ausreichend hohe Festigkeiten und niedrige Durchlässigkeiten der erhärteten Zementmischung.

Wie bereits, erläutert, weist die Zementmischung zudem zumindest einen Erstarrungsregler auf. Bei dem zumindest einen Erstarrungsregler handelt es sich vorzugsweise um Gips oder Halbhydrat oder Anhydrit. Dass die Zementmischung zumindest einen Erstarrungsregler enthält, bedeutet (wie oben bereits erwähnt), dass sie auch eine Mischung aus verschiedenen Erstarrungsreglern enthalten kann.

Vorzugsweise weist die Zementmischung einen SO₃-Gehalt von 1 bis 8 M.-%, bevorzugt 1 bis 6 M.-%, besonders bevorzugt 1 bis 3 M.-%, bezogen auf die Gesamtmasse der Zementmischung, bestimmt mittels chemischer Röntgenfluoreszenzanalyse gemäß DIN EN 196-2:2013-10 auf.

Infolgedessen wird der Gehalt an Erstarrungsregler auf den gewünschten Gehalt an SO₃ abgestimmt.

Wie bereits erläutert, kann die Zementmischung zudem einen oder mehrere Nebenbestandteile aufweisen. Vorzugsweise handelt es sich um Nebenbestandteile gemäß DIN EN 197-1:2011-11.

Die Herstellung der Zementmischung erfolgt dabei vorzugsweise durch Mischen der einzelnen, falls notwendig bereits gemahlenen, Zementmischungsbestandteile miteinander, wobei vorzugsweise lediglich der Portlandzementklinker vor dem Vermischen mit dem zumindest einen Erstarrungsregler gemeinsam vermahlen wird. Alle anderen Zementmischungsbestandteile werden, falls sie gemahlen werden müssen wie insbesondere die Zusatzkomponente und/oder das Puzzolan, vorzugsweise getrennt gemahlen.

Es liegt aber selbstverständlich auch im Rahmen der Erfindung, die Bestandteile der erfindungsgemäßen Zementmischung in jeglicher Kombination vor dem Mischen mit den anderen Bestandteilen gemeinsam zu vermahlen.

Wie bereits erläutert, handelt es sich bei der erfindungsgemäßen Zementmischung vorzugsweise um eine Tiefbohrzementmischung, die zur Herstellung einer Tiefbohrzementsuspension verwendet wird. Dazu wird die Zementmischung mit Wasser und gegebenenfalls zumindest einem Zementationsadditiv bzw. Zusatzmittel vermischt.

Die Zementmischung kann dabei zumindest ein übliches, trockenes Zementationsadditiv bzw. Zusatzmittel zur Einstellung gewünschter Eigenschaften bei der Zementation und später im Bohrloch enthalten. Bei dem zumindest einen Zusatzmittel handelt es sich vorzugsweise um einen Verflüssiger, einen Verzögerer, einen Filtratverlustreduzierer, ein Expansionsmittel, ein Fließmittel, ein Wasserretentionsmittel sowie ein Polymer zur Verringerung der Permeabilität.

Vorzugsweise beträgt die Gesamtmenge an Zementationsadditiv bzw. Zusatzmittel in der Zementmischung 0 bis 5 M.-%, bevorzugt 0 bis 2 M.-%, bezogen auf die Gesamtmasse der trockenen Zementmischung.

Alternativ oder zusätzlich kann das zumindest eine Zementationsadditiv bzw. Zusatzmittel in trockener oder flüssiger Form bei der Herstellung der Zementsuspension zugegeben werden.

Die Tiefbohrzementsuspension wird dann in an sich bekannter Weise für die Tiefbohrzementierung verwendet. Insbesondere wird die Tiefbohrzementsuspension durch eine Rohrtour bzw. Verrohrung zur Bohrlochsohle gepumpt und dort von unten nach oben in den Ringraum zwischen den Rohren der Rohrtour und Gesteinswand oder zwischen den einzelnen Rohren der Rohrtour gepresst. Die im Ringraum erhärtete Zementsuspension bildet dann einen aus Zementstein bestehenden Zementmantel der Rohrtour.

Vorzugsweise erfüllt die Zementmischung und/oder die Zementsuspension die physikalischen Anforderungen der API Specification 10A für Class K.

Vorzugsweise weist die Zementsuspension folgende Eigenschaften gemäß der API Specification 10A auf:

| | | vorzugsweise |
|---|---|---|
| Wasseranteil bezogen auf Zementmischung | 30 bis 50 M.-% | 38 bis 45 M.-% |
| Freies Wasser | 0 bis 5,9 M.-% | 0 bis 3,0 M.-% |
| Druckfestigkeit (60°C/8 h) | 3,5 bis 14 MPa | 7 bis 14 MPa |
| Versteifungszeitmessung bei 52°C und 35,6 MPa, Versteifungszeit | 70 - 140 min | 90 - 120 min |
| Versteifungszeitmessung bei 52°C und 35,6 MPa, Konsistenz der Zementsuspension nach 30 min | <30 Bearden Unit of Consistency (Bc) | <25 Bc |

Des Weiteren kann die erfindungsgemäße Zementmischung auch in einer Trockenbetonmischung oder einer Trockenmörtelmischung und/oder in einer Frischbetonmasse oder einer Frischmörtelmasse bzw. zur Herstellung derselben verwendet werden.

### Ausführungsbeispiel:

**Tabelle 1: Zusammensetzung der Zementmischung**

| | **M.-%** |
|---|---|
| **Well Cement Class G** | 80 |
| **Trass** | 10 |
| **Olivin** | 10 |

**Tabelle 2: Eigenschaften der Zementmischung**

| | |
|---|---|
| **d₉₀-Wert [µm]** | 45,7 |
| **d₅₀-Wert [µm]** | 14,9 |
| **Blaine-Wert [cm²/g]** | 3640 |
| **SO₃-Gehalt [M.-%]** | 2,3 |
| **Reindichte** | 3,14 |

Die verwendeten Rohstoffe wiesen folgende Eigenschaften auf:

**Tabelle 3: Eigenschaften des Well Cement Class G**

| **Well Cement Class G** | |
|---|---|
| **d₉₀-Wert [µm]** | 42,7 |
| **Blaine-Wert [cm²/g]** | 3230 |
| **Reindichte [g/cm³]** | 3,17 |
| **SO₃-Gehalt [M.-%]** | 2,7 |
| **CaO-Gehalt [M.-%]** | 63,7 |
| **C₃S-Gehalt [M.-%]** | 51,4 |
| **C₃A-Gehalt [M.-%]** | 2,4 |

**Tabelle 4: Eigenschaften des Trasses**

| **Trass** | |
|---|---|
| **d₉₀-Wert [µm]** | 71,5 |
| **d₅₀-Wert [µm]** | 12,3 |
| **Blaine-Wert [cm²/g]** | 6370 |
| **Reindichte [g/cm³]** | 2,68 |
| **SiO₂-Gehalt [M.-%]** | 54,0 |
| **reaktive Kieselsäure [M.-%]** | 29 |
| **Al₂O₃-Gehalt [M.-%]** | 18,0 |

**Tabelle 5: Eigenschaften des Olivins**

| **Olivin** | |
|---|---|
| **d₉₀-Wert [µm]** | 84,0 |
| **d₅₀-Wert [µm]** | 26,5 |
| **Blaine-Wert [cm²/g]** | 2530 |
| **Reindichte [g/cm³]** | 3,20 |
| **MgO-Gehalt [M.-%]** | 39,9 |
| **SiO₂-Gehalt [M.-%]** | 42,0 |
| **Fe₂O₃-Gehalt [M.-%]** | 9,0 |

Aus der Zementmischung wurde durch Anmischen mit Wasser eine Zementsuspension mit einem Wasser-Zementmischungsverhältnis von 0,42 hergestellt.

Die hergestellte Zementsuspension hatte folgende Eigenschaften nach API Specification 10A:

| | |
|---|---|
| Freies Wasser | 0,5 M.-% |
| Druckfestigkeit (60°C/8 h) | 12,2 MPa |
| Versteifungszeitmessung bei 52°C und 35,6 MPa, Versteifungszeit | 101 min |
| Versteifungszeitmessung bei 52°C und 35,6 MPa, Konsistenz der Zementsuspension nach 30 min | 24 Bc |

Abschließend wird darauf hingewiesen, dass alle genannten, insbesondere beanspruchten, Merkmale der Zementmischung, der Zementsuspension, der Trockenmörtelmischung, der Trockenbetonmischung, der Frischmörtelmasse sowie der Frischbetonmasse für sich genommen und in jeglicher Kombination besonders vorteilhaft und Gegenstand der vorliegenden Erfindung sind.

Zudem sind die jeweils angegebenen Ober- und Untergrenzen der einzelnen Bereichsangaben erfindungsgemäß alle miteinander kombinierbar.

## Patentansprüche

1. Trockene, hydraulisch erhärtende, Zementmischung, vorzugsweise Tiefbohrzementmischung, aufweisend 95-100 M.-% Hauptbestandteile und 0-5 M.-% Nebenbestandteile, jeweils bezogen auf die Summe aus Haupt- und Nebenbestandteilen, sowie zusätzlich zu den Haupt- und Nebenbestandteilen zumindest einen Erstarrungsregler, wobei die Zementmischung
a) als Hauptbestandteil Portlandzementklinker in einer Menge von 70 bis 85 M.-%, bezogen auf die Summe aus Haupt- und Nebenbestandteilen,
b) als Haupt- oder Nebenbestandteil zumindest ein Puzzolan in einer Gesamtmenge an Puzzolan von 5 bis 25 M.-%, bezogen auf die Summe aus Haupt- und Nebenbestandteilen,
aufweist,
**dadurch gekennzeichnet, dass**
die Zementmischung als Haupt- oder Nebenbestandteil zumindest eine mineralische, hydraulisch inaktive Zusatzkomponente aufweist, die eine Reindichte ≥ 3,0 g/cm³, bestimmt gemäß DIN EN 196-6:2019-03 aufweist, in einer Gesamtmenge an Zusatzkomponente von 5 bis 15 M.-%, bezogen auf die Summe aus Haupt- und Nebenbestandteilen.

2. Zementmischung nach Anspruch 1,
**dadurch gekennzeichnet, dass**
die zumindest eine Zusatzkomponente aus Olivin, Forsterit oder Fayalit, besteht.

3. Zementmischung nach Anspruch 1 oder 2,
**dadurch gekennzeichnet, dass**
die zumindest eine inaktive Zusatzkomponente eine Reindichte ≥ 3,0 bis 4,4 g/cm³, vorzugsweise ≥ 3,0 bis 4,0 g/cm³, bevorzugt ≥ 3,0 bis 3,5 g/cm³, bestimmt gemäß DIN EN 196-6:2019-03 aufweist.

4. Zementmischung nach einem der vorhergehenden Ansprüche, **dadurch gekennzeichnet, dass**
a) die Summe aus Portlandzementklinker, Puzzolan und Zusatzkomponente mindestens 60 M.-%, vorzugsweise mindestens 80 M.-%, bevorzugt mindestens 85 M.-%, besonders bevorzugt mindestens 95 M.-%, bezogen auf die Summe aus Haupt- und Nebenbestandteilen, beträgt,
und/oder
b) die Zementmischung zu mindestens 95 M.-%, bevorzugt zu 98 M.-%, besonders bevorzugt zu 100 M.-% aus den Haupt- und Nebenbestandteilen und Erstarrungsregler besteht.

5. Zementmischung nach einem der vorhergehenden Ansprüche, **dadurch gekennzeichnet, dass**
a) die Zusatzkomponente einen MgO-Gehalt von 1 bis 60 M.-%, bevorzugt 25 bis 55 M.-%, besonders bevorzugt 35 bis 45 M.-%, bestimmt mittels chemischer Röntgenfluoreszenzanalyse gemäß DIN EN 196-2:2013-10, aufweist,
und/oder
b) die Zusatzkomponente einen SiO₂-Gehalt von 30 bis 60 M.-%, bevorzugt 35 bis 55 M.-%, besonders bevorzugt 40 bis 50 M.-%, bestimmt mittels chemischer Röntgenfluoreszenzanalyse gemäß DIN EN 196-2:2013-10, aufweist,
und/oder
c) die Zusatzkomponente einen Fe₂O₃-Gehalt von 1 bis 75 M.-%, bevorzugt 5 bis 45 M.-%, besonders bevorzugt 5 bis 15 M.-%, bestimmt mittels chemischer Röntgenfluoreszenzanalyse gemäß DIN EN 196-2:2013-10, aufweist.

6. Zementmischung nach einem der vorhergehenden Ansprüche, **dadurch gekennzeichnet, dass**
a) die Zusatzkomponente einen d₉₀-Wert von 3 bis 120 µm, bevorzugt von 10 bis 100 µm, besonders bevorzugt 50 bis 90 µm, und/oder einen d₅₀-Wert von 3 bis 100 µm, bevorzugt von 10 bis 70 µm, besonders bevorzugt 20 bis 40 µm, bestimmt gemäß DIN EN 196-6:2019-03, aufweist,
und/oder
b) die Zusatzkomponente einen Blaine-Wert von 1500 bis 7000 cm²/g, bevorzugt von 2000 bis 6000 cm²/g, besonders bevorzugt 3000 bis 5000 cm²/g, bestimmt gemäß DIN EN 196-6:2019-03, aufweist.

7. Zementmischung nach einem der vorhergehenden Ansprüche, **dadurch gekennzeichnet, dass**
a) es sich bei dem zumindest einen Puzzolan um Trass oder Flugasche oder Silicastaub oder kalzinierten Ton, bevorzugt um Trass, handelt, und/oder
b) das Puzzolan, bevorzugt der Trass, einen d₉₀-Wert von 40 bis 120 µm, bevorzugt von 50 bis 100 µm, besonders bevorzugt von 60 bis 90 µm, und/oder einen d₅₀-Wert von 3 bis 50 µm, bevorzugt von 5 bis 30 µm, besonders bevorzugt von 10 bis 20 µm, bestimmt gemäß DIN EN 196-6:2019-03, aufweist,
und/oder
c) das Puzzolan, bevorzugt der Trass, einen Blaine-Wert von 3000 bis 8500 cm²/g, bevorzugt von 4000 bis 8000 cm²/g, besonders bevorzugt 5000 bis 7000 cm²/g, bestimmt gemäß DIN EN 196-6:2019-03, aufweist,
und/oder
d) das Puzzolan, bevorzugt der Trass, einen SiO₂-Gehalt von 25 bis 70 M.-%, bevorzugt 40 bis 60 M.-%, besonders bevorzugt 45 bis 55 M.-%, bestimmt mittels chemischer Röntgenfluoreszenzanalyse gemäß DIN EN 196-2:2013-10, aufweist.
und/oder
e) das Puzzolan, bevorzugt der Trass, einen Gehalt an reaktiver Kieselsäure > 25 M.-%, bestimmt mittels Prüfung der Puzzolanität gemäß DIN EN 196-5:2011-06 aufweist.

8. Zementmischung nach einem der vorhergehenden Ansprüche, **dadurch gekennzeichnet, dass**
a) der Portlandzementklinker einen CaO-Gehalt ≤ 75 M.-%, bevorzugt ≤ 70 M.-%, besonders bevorzugt ≤ 68 M.-%, und/oder einen CaO-Gehalt von 45 bis 75 M.-%, bevorzugt 50 bis 70 M.-%, besonders bevorzugt 60 bis 68 M.-%, bestimmt mittels chemischer Röntgenfluoreszenzanalyse gemäß DIN EN 196-2:2013-10, aufweist,
und/oder
b) der Portlandzementklinker einen C₃A-Gehalt von 0 bis 8 M.-%, bevorzugt 0 bis 5 M.-%, besonders bevorzugt 0 bis 3 M.-%, bestimmt mittels chemischer Röntgenfluoreszenzanalyse gemäß DIN EN 196-2:2013-10 und anschließender Berechnung gemäß DIN EN ISO 10426:2007-01, aufweist,
und/oder
c) der Portlandzementklinker einen C₃S-Gehalt ≤ 80 M.-%, bevorzugt ≤ 65 M.-%, besonders bevorzugt ≤ 55 M.-%, und/oder einen C₃S-Gehalt von 40 bis 80 M.-%, bevorzugt 48 bis 65 M.-%, besonders bevorzugt 50 bis 55 M.-%, bestimmt mittels chemischer Röntgenfluoreszenzanalyse gemäß DIN EN 196-2:2013-10 und anschließender Berechnung gemäß DIN EN ISO 10426:2007-01, aufweist.

9. Zementmischung nach einem der vorhergehenden Ansprüche, **dadurch gekennzeichnet, dass**
a) die Zementmischung einen d₉₀-Wert von 20 bis 80 µm, bevorzugt von 30 bis 60 µm, besonders bevorzugt von 40 bis 50 µm, und/oder einen d₅₀-Wert von 5 bis 50 µm, bevorzugt von 10 bis 30 µm, besonders bevorzugt von 10 bis 20 µm, bestimmt gemäß DIN EN 196-6:2019-03, aufweist,
und/oder
b) die Zementmischung einen Blaine-Wert von 3000 bis 5000 cm²/g, bevorzugt von 3000 bis 4500 cm²/g, besonders bevorzugt 3500 bis 4500 cm²/g, bestimmt gemäß DIN EN 196-6:2019-03, aufweist.
und/oder
c) die Zementmischung einen SO₃-Gehalt von 1 bis 8 M.-%, bevorzugt 1 bis 6 M.-%, besonders bevorzugt von 1 bis 3 M.-%, bestimmt mittels chemischer Röntgenfluoreszenzanalyse gemäß DIN 196-2:2013-10, aufweist.

10. Verfahren zur Herstellung einer Zementmischung nach einem der vorhergehenden Ansprüche,
**dadurch gekennzeichnet, dass**
die Zementmischung durch Mischen der einzelnen Zementmischungsbestandteile miteinander hergestellt wird, wobei vorzugweise der Portlandzementklinker vor dem Vermischen mit den anderen Zementmischungsbestandteilen mit dem zumindest einen Erstarrungsregler gemeinsam vermahlen wird und/oder vorzugsweise die zumindest eine Zusatzkomponente vermahlen wird und/oder vorzugsweise das zumindest eine Puzzolan getrennt vermahlen wird.

11. Zementsuspension, vorzugsweise Tiefbohrzementsuspension, aufweisend eine Zementmischung und Wasser,
**dadurch gekennzeichnet, dass**
die Zementsuspension eine Zementmischung gemäß einem der Ansprüche 1 bis 9 und/oder hergestellt gemäß Anspruch 10 aufweist.

12. Zementsuspension nach Anspruch 11,
**dadurch gekennzeichnet, dass**
a) die Zementsuspension einen Wasseranteil bezogen auf die Zementmischung von 30 bis 50 M.-%, bevorzugt 38 bis 45 M.-%, aufweist, und/oder
b) die Zementsuspension zumindest ein Zusatzmittel aufweist, und/oder
c) die Zementsuspension freies Wasser von 0 bis 5,9 M.-%, bevorzugt 0 bis 3 M.-%, gemäß API Specification 10A aufweist,
und/oder
d) die Zementsuspension eine Druckfestigkeit (60°C/8 h) von 3,5 bis 14 MPa, bevorzugt 7 bis 14 MPa, gemäß API Specification 10A aufweist, und/oder
e) die Zementsuspension eine Versteifungszeit bei einer Versteifungszeitmessung bei 52°C und 35,6 MPa gemäß API Specification 10A von 70 bis 140 Minuten, vorzugsweise 90 bis 120 Minuten, aufweist, und/oder
f) die Zementsuspension eine Konsistenz nach 30 Minuten bei einer Versteifungszeitmessung bei 52°C und 35,6 MPa gemäß API Specification 10A von < 30 Bc, vorzugsweise < 25 Bc, aufweist.

13. Verwendung einer Zementmischung gemäß einem der Ansprüche 1 bis 9 und/oder hergestellt gemäß Anspruch 10 zur Herstellung einer Zementsuspension, vorzugsweise einer Tiefbohrzementsuspension, bevorzugt einer Zementsuspension gemäß Anspruch 11 oder 12.

14. Verwendung einer Zementmischung gemäß einem der Ansprüche 1 bis 9 und/oder hergestellt gemäß Anspruch 10 oder einer Zementsuspension gemäß Anspruch 11 oder 12 bei der Tiefbohrzementierung, vorzugsweise zur Herstellung eines Zementmantels einer Rohrtour bei der Tiefbohrzementierung.

15. Trockenmörtelmischung, aufweisend eine Zementmischung gemäß einem der Ansprüche 1 bis 9 und/oder hergestellt gemäß Anspruch 10 sowie zumindest einen Zuschlagstoff.

16. Frischmörtelmasse aufweisend eine Trockenmörtelmischung gemäß Anspruch 15 und Wasser.

17. Trockenbetonmischung, aufweisend eine Zementmischung gemäß einem der Ansprüche 1 bis 9 und/oder hergestellt gemäß Anspruch 10 sowie zumindest einen Zuschlagstoff.

18. Frischbetonmasse aufweisend eine Trockenbetonmischung gemäß Anspruch 17 und Wasser.

## Claims

1. Dry, hydraulically hardening cement mixture, preferably a well cement mixture, comprising 95-100 ma.% of main constituents and 0-5 ma.% of secondary constituents, respectively based on the sum of main and secondary constituents, and, in addition to the main and secondary constituents, at least one setting regulator, wherein the cement mixture comprises
a) Portland cement clinker as a main constituent in an amount of 70 to 85 ma.%, based on the sum of the main and secondary constituents,
b) at least one pozzolan as a main or secondary constituent in a total amount of pozzolan of 5 to 25 ma.%, based on the sum of the main and secondary constituents,
**characterized in that**
the cement mixture comprises as a main or secondary constituent at least one mineral, hydraulically inactive additive component which comprises a true density ≥ 3.0 g/cm³, determined in accordance with DIN EN 196-6:2019-03, in a total amount of additive component of 5 to 15 ma.%, based on the sum of the main and secondary constituents.

2. Cement mixture according to claim 1,
**characterized in that**
the at least one additive component consists of olivine, forsterite or fayalite.

3. Cement mixture according to claim 1 or 2,
**characterized in that**
the at least one inactive additive component comprises a true density ≥ 3.0 to 4.4 g/cm³, preferably ≥ 3.0 to 4.0 g/cm³, preferably ≥ 3.0 to 3.5 g/cm³, determined according to DIN EN 196-6:2019-03.

4. Cement mixture according to any one of the preceding claims, **characterized in that**
a) the sum of Portland cement clinker, pozzolan and additive component is at least 60 ma.%, preferably at least 80 ma.%, preferably at least 85 ma.%, particularly preferably at least 95 ma.%, based on the sum of the main and secondary components,
and/or
b) the cement mixture consists of at least 95 ma.%, preferably 98 ma.%, particularly preferably 100 ma.% of the main and secondary constituents and setting regulator.

5. Cement mixture according to any one of the preceding claims, **characterized in that**
a) the additive component comprises an MgO content of 1 to 60 ma.%, preferably 25 to 55 ma.%, particularly preferably 35 to 45 ma.%, determined by chemical X-ray fluorescence analysis according to DIN EN 196-2:2013-10,
and/or
b) the additive component comprises an SiO₂ content of 30 to 60 ma.%, preferably 35 to 55 ma.%, particularly preferably 40 to 50 ma.%, determined by chemical X-ray fluorescence analysis according to DIN EN 196-2:2013-10,
and/or
c) the additive component comprises an Fe₂O₃ content of 1 to 75 ma.%, preferably 5 to 45 ma.%, particularly preferably 5 to 15 ma.%, determined by chemical X-ray fluorescence analysis according to DIN EN 196-2:2013-10.

6. Cement mixture according to any one of the preceding claims, **characterized in that**
a) the additive component comprises a d₉₀ value of 3 to 120 µm, preferably 10 to 100 µm, particularly preferably 50 to 90 µm, and/or a d₅₀ value of 3 to 100 µm, preferably 10 to 70 µm, particularly preferably 20 to 40 µm, determined in accordance with DIN EN 196-6:2019-03, and/or
b) the additive component comprises a Blaine value of 1500 to 7000 cm²/g, preferably 2000 to 6000 cm²/g, particularly preferably 3000 to 5000 cm²/g, determined in accordance with DIN EN 196-6:2019-03.

7. Cement mixture according to any one of the preceding claims, **characterized in that**
a) the at least one pozzolan is trass or fly ash or silica fume or calcined clay, preferably trass,
and/or
b) the pozzolan, preferably the trass, comprises a d₉₀ value of 40 to 120 µm, preferably of 50 to 100 µm, particularly preferably of 60 to 90 µm, and/or a d₅₀ value of 3 to 50 µm, preferably of 5 to 30 µm, particularly preferably of 10 to 20 µm, determined in accordance with DIN EN 196-6:2019-03,
and/or
c) the pozzolan, preferably the trass, comprises a Blaine value of 3000 to 8500 cm²/g, preferably 4000 to 8000 cm²/g, particularly preferably 5000 to 7000 cm²/g, determined in accordance with DIN EN 196-6:2019-03,
and/or
d) the pozzolan, preferably the trass, comprises an SiO₂ content of 25 to 70 ma.%, preferably 40 to 60 ma.%, particularly preferably 45 to 55 ma.%, determined by chemical X-ray fluorescence analysis according to DIN EN 196-2:2013-10.
and/or
e) the pozzolan, preferably the trass, comprises a reactive silica content > 25 ma.-%, determined by pozzolanicity testing according to DIN EN 196-5:2011-06.

8. Cement mixture according to any one of the preceding claims, **characterized in that**
a) the Portland cement clinker comprises a CaO content of ≤ 75 ma.%, preferably ≤ 70 ma.%, particularly preferably ≤ 68 ma.%, and/or a CaO content of 45 to 75 ma.%, preferably 50 to 70 ma.%, particularly preferably 60 to 68 ma.%, determined by means of chemical X-ray fluorescence analysis in accordance with DIN EN 196-2:2013-10, and/or
b) the Portland cement clinker comprises a C₃A content of 0 to 8 ma.%, preferably 0 to 5 ma.%, particularly preferably 0 to 3 ma.%, determined by means of chemical X-ray fluorescence analysis in accordance with DIN EN 196-2:2013-10 and subsequent calculation in accordance with DIN EN ISO 10426:2007-01,
and/or
c) the Portland cement clinker comprises a C₃S content of ≤ 80 ma.%, preferably ≤ 65 ma.%, particularly preferably ≤ 55 ma.%, and/or a C₃S content of 40 to 80 ma.%, preferably 48 to 65 ma.%, particularly preferably 50 to 55 ma.%, determined by means of chemical X-ray fluorescence analysis in accordance with DIN EN 196-2:2013-10 and subsequent calculation in accordance with DIN EN ISO 10426:2007-01.

9. Cement mixture according to any one of the preceding claims, **characterized in that**
a) the cement mixture comprises a d₉₀ value of 20 to 80 µm, preferably of 30 to 60 µm, particularly preferably of 40 to 50 µm, and/or a d₅₀value of 5 to 50 µm, preferably of 10 to 30 µm, particularly preferably of 10 to 20 µm, determined in accordance with DIN EN 196-6:2019-03,
and/or
b) the cement mixture comprises a Blaine value of 3000 to 5000 cm²/g, preferably 3000 to 4500 cm²/g, particularly preferably 3500 to 4500 cm²/g, determined in accordance with DIN EN 196-6:2019-03.
and/or
c) the cement mixture comprises an SO₃ content of 1 to 8 ma.%, preferably 1 to 6 ma.%, particularly preferably 1 to 3 ma.%, determined by chemical X-ray fluorescence analysis according to DIN 196-2:2013-10.

10. A process for preparing a cement mixture according to any one of the preceding claims,
**characterized in that**
the cement mixture is produced by mixing the individual cement mixture constituents with one another, wherein preferably the Portland cement clinker is ground together with the at least one setting regulator before mixing with the other cement mixture constituents and/or preferably the at least one additive component is ground and/or preferably the at least one pozzolan is ground separately.

11. Cement suspension, preferably well cement suspension, comprising a cement mixture and water,
**characterized in that**
the cement suspension comprises a cement mixture according to any one of claims 1 to 9 and/or prepared according to claim 10.

12. Cement suspension according to claim 11,
**characterized in that**
a) the cement suspension comprises a water content relative to the cement mixture of 30 to 50 ma.%, preferably 38 to 45 ma.%,
and/or
b) the cement suspension contains at least one admixture,
and/or
c) the cement suspension comprises free water of 0 to 5.9 ma.%, preferably 0 to 3 ma.%, according to API Specification 10A,
and/or
d) the cement suspension comprises a compressive strength (60°C/8 h) of 3.5 to 14 MPa, preferably 7 to 14 MPa, according to API Specification 10A,
and/or
e) the cement suspension comprises a stiffening time of 70 to 140 minutes, preferably 90 to 120 minutes, with a stiffening time measurement at 52°C and 35.6 MPa in accordance with API Specification 10A,
and/or
f) the cement suspension comprises a consistency after 30 minutes of < 30 Bc, preferably < 25 Bc, with a stiffening time measurement at 52°C and 35.6 MPa according to API Specification 10A.

13. Use of a cement mixture according to any one of claims 1 to 9 and/or prepared according to claim 10 for the preparation of a cement suspension, preferably a well cement suspension, preferably a cement suspension according to claim 11 or 12.

14. Use of a cement mixture according to any one of claims 1 to 9 and/or prepared according to claim 10 or a cement suspension according to claim 11 or 12 in well cementing, preferably for producing a cement casing of a pipe tour in well cementing.

15. A dry mortar mixture comprising a cement mixture according to any one of claims 1 to 9 and/or prepared according to claim 10 and at least one aggregate.

16. Fresh mortar mass comprising a dry mortar mixture according to claim 15 and water.

17. A dry concrete mixture comprising a cement mixture according to any one of claims 1 to 9 and/or prepared according to claim 10 and at least one aggregate.

18. Fresh concrete mass comprising a dry concrete mixture according to claim 17 and water.

## Revendications

1. Mélange de ciment sec, durcissant hydrauliquement, de préférence mélange de ciment à puits de pétrole, présentant 95-100 % en masse de constituants principaux et 0-5 % en masse de constituants secondaires, respectivement par rapport à la somme des constituants principaux et secondaires, ainsi qu'en plus des constituants principaux et secondaires, au moins un régulateur de prise, où le mélange de ciment présente
a) en tant que composant principal, du clinker de ciment Portland en une quantité de 70 à 85 % en masse, par rapport à la somme des constituants principaux et secondaires,
b) en tant que composant principal ou secondaire, au moins une pouzzolane en une quantité totale de pouzzolane de 5 à 25 % en masse, par rapport à la somme des constituants principaux et secondaires,
**caractérisé en ce que**
le mélange de ciment présente, en tant que composant principal ou secondaire, au moins un composant additionnel minéral, hydrauliquement inactif, qui présente une masse volumique absolue ≥ 3,0 g/cm³, déterminée selon DIN EN 196-6:2019-03, dans une quantité totale de composant additionnel de 5 à 15 % en masse, par rapport à la somme des constituants principaux et secondaires.

2. Mélange de ciment selon la revendication 1,
**caractérisé en ce que**
dont le au moins un composant additionnel est constitué d'olivine, de forstérite ou de fayalite.

3. Mélange de ciment selon la revendication 1 ou 2,
**caractérisé en ce que**
le au moins un composant additionnel inactif présente une masse volumique absolue ≥ 3,0 à 4,4 g/cm³, de préférence ≥ 3,0 à 4,0 g/cm³, de préférence ≥ 3,0 à 3,5 g/cm³, déterminée selon DIN EN 196-6:2019-03.

4. Mélange de ciment selon l'une quelconque des revendications précédentes,
**caractérisé en ce que**
a) la somme du clinker de ciment Portland, de la pouzzolane et du composant additionnel est d'au moins 60 % en masse, de préférence d'au moins 80 % en masse, de préférence d'au moins 85 % en masse, de manière particulièrement préférée d'au moins 95 % en masse, par rapport à la somme des constituants principaux et secondaires, et/ou
b) le mélange de ciment est constitué d'au moins 95 % en masse, de préférence à 98 % en masse, de manière particulièrement préférée à 100 % en masse, des constituants principaux et secondaires et des régulateurs de prise.

5. Mélange de ciment selon l'une quelconque des revendications précédentes,
**caractérisé en ce que**
a) le composant additionnel présente une teneur en MgO de 1 à 60 % en masse, de préférence de 25 à 55 % en masse, de manière particulièrement préférée de 35 à 45 % en masse, déterminée au moyen d'une analyse chimique par fluorescence X selon DIN EN 196-2:2013-10,
et/ou
b) le composant additionnel présente une teneur en SiO₂ de 30 à 60 % en masse, de préférence de 35 à 55 % en masse, de manière particulièrement préférée de 40 à 50 % en masse, déterminée au moyen d'une analyse chimique par fluorescence X selon DIN EN 196-2:2013-10,
et/ou
c) le composant d'addition présente une teneur en Fe₂O₃ de 1 à 75 % en masse, de préférence de 5 à 45 % en masse, de manière particulièrement préférée de 5 à 15 % en masse, déterminée au moyen d'une analyse chimique de fluorescence X selon DIN EN 196-2:2013-10.

6. Mélange de ciment selon l'une quelconque des revendications précédentes,
**caractérisé en ce que**
a) le composant additionnel présente une valeur d₉₀ de 3 à 120 µm, de préférence de 10 à 100 µm, de manière particulièrement préférée de 50 à 90 µm, et/ou une valeur d₅₀ de 3 à 100 µm, de préférence de 10 à 70 µm, de manière particulièrement préférée de 20 à 40 µm, déterminée selon DIN EN 196-6:2019-03,
et/ou
b) le composant additionnel présente une valeur Blaine de 1500 à 7000 cm²/g, de préférence de 2000 à 6000 cm²/g, de manière particulièrement préférée de 3000 à 5000 cm²/g, déterminée selon DIN EN 196-6:2019-03.

7. Mélange de ciment selon l'une quelconque des revendications précédentes,
**caractérisé en ce que**
a) ladite au moins une pouzzolane est du trass ou des cendres volantes ou de la fumée de silice ou de l'argile calcinée, de préférence du trass,
et/ou
b) la pouzzolane, de préférence le trass, présente une valeur d₉₀ de 40 à 120 µm, de préférence de 50 à 100 µm, de manière particulièrement préférée de 60 à 90 µm, et/ou une valeur d₅₀ de 3 à 50 µm, de préférence de 5 à 30 µm, de manière particulièrement préférée de 10 à 20 µm, déterminée selon DIN EN 196-6:2019-03,
et/ou
c) la pouzzolane, de préférence le trass, présente une valeur Blaine de 3000 à 8500 cm²/g, de préférence de 4000 à 8000 cm²/g, de manière particulièrement préférée de 5000 à 7000 cm²/g, déterminée selon DIN EN 196-6:2019-03,
et/ou
d) la pouzzolane, de préférence le trass, présente une teneur en SiO₂ de 25 à 70 % en masse, de préférence de 40 à 60 % en masse, de manière particulièrement préférée de 45 à 55 % en masse, déterminée par analyse chimique de fluorescence X selon DIN EN 196-2:2013-10.
et/ou
e) la pouzzolane, de préférence le trass, présente une teneur en acide silicique réactif > 25 % en masse, déterminée au moyen d'un test de pouzzolanité selon DIN EN 196-5:2011-06.

8. Mélange de ciment selon l'une quelconque des revendications précédentes,
**caractérisé en ce que**
a) le clinker de ciment Portland présente une teneur en CaO ≤ 75 % en masse, de préférence ≤ 70 % en masse, de manière particulièrement préférée ≤ 68 % en masse, et/ou une teneur en CaO de 45 à 75 % en masse, de préférence 50 à 70 % en masse, de manière particulièrement préférée 60 à 68 % en masse, déterminée au moyen d'une analyse chimique par fluorescence X selon DIN EN 196-2:2013-10, et/ou
b) le clinker de ciment Portland présente une teneur en C₃A de 0 à 8 % en masse, de préférence de 0 à 5 % en masse, de manière particulièrement préférée de 0 à 3 % en masse, déterminée au moyen d'une analyse chimique par fluorescence X selon DIN EN 196-2:2013-10 et d'un calcul ultérieur selon DIN EN ISO 10426:2007-01,
et/ou
c) le clinker de ciment Portland présente une teneur en C₃S ≤ 80 % en masse, de préférence ≤ 65 % en masse, de manière particulièrement préférée ≤ 55 % en masse, et/ou une teneur en C₃S de 40 à 80 % en masse, de préférence 48 à 65 % en masse, de manière particulièrement préférée 50 à 55 % en masse, déterminée au moyen d'une analyse chimique par fluorescence X selon DIN EN 196-2:2013-10 et d'un calcul ultérieur selon DIN EN ISO 10426:2007-01.

9. Mélange de ciment selon l'une quelconque des revendications précédentes,
**caractérisé en ce que**
a) le mélange de ciment présente une valeur d₉₀ de 20 à 80 µm, de préférence de 30 à 60 µm, de manière particulièrement préférée de 40 à 50 µm, et/ou une valeur d₅₀ de 5 à 50 µm, de préférence de 10 à 30 µm, de manière particulièrement préférée de 10 à 20 µm, déterminée selon DIN EN 196-6:2019-03,
et/ou
b) le mélange de ciment présente une valeur Blaine de 3000 à 5000 cm²/g, de préférence de 3000 à 4500 cm²/g, de manière particulièrement préférée de 3500 à 4500 cm²/g, déterminée selon DIN EN 196-6:2019-03.
et/ou
c) le mélange de ciment présente une teneur en SO₃ de 1 à 8 % en masse, de préférence de 1 à 6 % en masse, de manière particulièrement préférée de 1 à 3 % en masse, déterminée au moyen d'une analyse chimique par fluorescence X selon DIN 196-2:2013-10.

10. Procédé de préparation d'un mélange de ciment selon l'une quelconque des revendications précédentes,
**caractérisé en ce que**
le mélange de ciment est préparé en mélangeant les différents constituants du mélange de ciment entre eux, où, de préférence, le clinker de ciment Portland est broyé conjointement avec l'au moins un régulateur de prise avant d'être mélangé avec les autres constituants du mélange de ciment et/ou, de préférence, l'au moins un composant additionnel est broyé et/ou, de préférence, l'au moins une pouzzolane est broyée séparément.

11. Suspension de ciment, de préférence suspension de ciment à puits de pétrole, comprenant un mélange de ciment et de l'eau,
**caractérisé en ce que**
la suspension de ciment comprend un mélange de ciment selon l'une quelconque des revendications 1 à 9 et/ou préparé selon la revendication 10 .

12. Suspension de ciment selon la revendication 11,
**caractérisé en ce que**
a) la suspension de ciment présente une quantité d'eau par rapport au mélange de ciment de 30 à 50 % en masse, de préférence de 38 à 45 % en masse,
et/ou
b) la suspension de ciment présente au moins un adjuvant,
et/ou
c) la suspension de ciment présente de l'eau libre de 0 à 5,9 % en masse, de préférence de 0 à 3 % en masse, selon la spécification API 10A,
et/ou
d) la suspension de ciment présente une résistance à la compression (60°C/8 h) de 3,5 à 14 MPa, de préférence de 7 à 14 MPa, selon la spécification API 10A,
et/ou
e) la suspension de ciment présente un temps de raidissement, lors d'une mesure du temps de raidissement à 52°C et 35,6 MPa selon la spécification API 10A, de 70 à 140 minutes, de préférence de 90 à 120 minutes,
et/ou
f) la suspension de ciment présente une consistance après 30 minutes lors d'une mesure du temps de raidissement à 52°C et 35,6 MPa selon la spécification API 10A de < 30 Bc, de préférence de < 25 Bc.

13. Utilisation d'un mélange de ciment selon l'une quelconque des revendications 1 à 9 et/ou préparé selon la revendication 10 pour la préparation d'une suspension de ciment, de préférence d'une suspension de ciment à puits de pétrole, de préférence d'une suspension de ciment selon la revendication 11 ou 12.

14. Utilisation d'un mélange de ciment selon l'une quelconque des revendications 1 à 9 et/ou préparé selon la revendication 10 ou d'une suspension de ciment selon la revendication 11 ou 12 dans la cimentation à puits de pétrole, de préférence pour la fabrication d'une enveloppe de ciment d'un tubage dans la cimentation à puits de pétrole.

15. Mélange de mortier sec, présentant un mélange de ciment selon l'une des revendications 1 à 9 et/ou fabriqué selon la revendication 10 ainsi qu'au moins un agrégat.

16. Masse de mortier frais comprenant un mélange de mortier sec selon la revendication 15 et de l'eau.

17. Mélange de béton sec, présentant un mélange de ciment selon l'une des revendications 1 à 9 et/ou fabriqué selon la revendication 10 ainsi qu'au moins un agrégat.

18. Masse de béton frais comprenant un mélange de béton sec selon la revendication 17 et de l'eau.
